(19) **Europäisches Patentamt**

**European Patent Office**

**Office européen des brevets**

(11) **EP 0 539 870 B1**

(12) **EUROPÄISCHE PATENTSCHRIFT**

(45) Veröffentlichungstag und Bekanntmachung des Hinweises auf die Patenterteilung:
**28.08.1996 Patentblatt 1996/35**

(51) Int. Cl.$^6$: **B01D 71/56**, B01D 67/00

(21) Anmeldenummer: **92118116.0**

(22) Anmeldetag: **22.10.1992**

(54) **Hydrophile, asymmetrische, chemikalienbeständige Polyaramidmembran**

Hydrophilic asymmetric chemically resistant polyaramide membranes

Membranes en polyaramide hydrophiles asymétriques résistantes aux produits chimiques

(84) Benannte Vertragsstaaten:
**BE CH DE DK FR GB IT LI NL SE**

(30) Priorität: **26.10.1991 DE 4135342**

(43) Veröffentlichungstag der Anmeldung:
**05.05.1993 Patentblatt 1993/18**

(73) Patentinhaber: **HOECHST AKTIENGESELLSCHAFT 65926 Frankfurt am Main (DE)**

(72) Erfinder:
  • **Wagener, Reinhard, Dr.**
    **W-6233 Kelkheim/Ts. (DE)**
  • **Schneider, Jürgen, Dr.**
    **W-6273 Waldems-Bermbach (DE)**
  • **Delius, Ulrich, Dr.**
    **W-6000 Frankfurt/M 71 (DE)**
  • **Herold, Friedrich, Dr.**
    **W-6238 Hofheim/Ts. (DE)**
  • **Miess, Georg-Emerich, Dr.**
    **W-8400 Regensburg (DE)**
  • **Meyer-Blumenroth, Ulrich, Dr.**
    **W-6270 Idstein/Ts. (DE)**

(56) Entgegenhaltungen:
EP-A- 0 322 837       EP-A- 0 325 962
EP-A- 0 382 009       EP-A- 0 445 673
WO-A-88/08738         FR-A- 2 231 711

EP 0 539 870 B1

**Beschreibung**

Die Erfindung betrifft makroporöse, asymmetrische, hydrophile Membranen enthaltend Polyaramid sowie ein Verfahren zu ihrer Herstellung.

Seit der Einführung asymmetrischer Membranen aus Celluloseacetat durch Loeb und Sourirajan (S. Sourirajan, Reverse Osmosis, Logos Press, London 1970) und aus hydrophoben Polymerisaten (US-PS 3,615,024) sind zahlreiche Membranen, insbesondere für Separationen von in Wasser gelösten nieder- und makromolekularen Bestandteilen entwickelt und vorgeschlagen worden, deren Struktur und Eignung in der Literatur angegeben (Desalination, 35 (1980),5-20) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Infolge ihres chemischen Aufbaus und ihrer Struktur können die einzelnen Membranen jeweils nur für ganz spezielle Separationsprobleme optimal geeignet sein. Hieraus resultiert die grundlegende Forderung, für neue Aufgabenstellungen stets neue Membranen zu entwickeln.

In der EP-A-0 082 433 wird eine übersichtliche Darstellung über die Vor-und Nachteile bereits bekannter Membranen gegeben. So gibt es beispielsweise hydrophile, asymmetrische Membranen aus Celluloseacetat mit befriedigenden antiadsorptiven Eigenschaften, die aber bezüglich ihrer thermischen und chemischen Beständigkeit sehr zu wünschen übrig lassen. Membranen aus Polysulfonen oder ähnlichen Polymeren besitzen zwar eine gute thermische und chemische Beständigkeit, allerdings besteht bei solchen Membranen wegen der hydrophoben Eigenschaften der eingesetzten Polymeren eine ausgeprägte Neigung, gelöste Stoffe zu adsorbieren, wodurch sich die Membran quasi verstopft. Die in der EP-A-0 082 433 beschriebenen Mischungen aus Polysulfon und Polyvinylpyrrolidon beseitigen zwar den durch die Hydrophobie des Polysulfons bedingten Nachteil, diese Mischungen sind jedoch gegenüber der Einwirkung von organischen Lösemitteln empfindlich.

Hydrophilie und gleichzeitig Resistenz gegenüber Lösemitteln findet man bei Membranen aus Celluloseregenerat; diese sind aber in sauren oder alkalischen Medien relativ leicht hydrolysierbar, und darüber hinaus werden sie von Mikroorganismen leicht angegriffen.

Der Erfindung liegt die Aufgabe zugrunde, poröse asymmetrische Membranen für die Mikro-, Nano- und Ultrafiltration bereitzustellen, die ausgeprägte hydrophile Eigenschaften besitzen, d.h. befähigt sind, erhebliche Mengen Wasser, bezogen auf ihr Gesamtgewicht, aufzunehmen, die gegen verseifende sowie gegen oxidative Agenzien sowie gegenüber thermischer Einwirkung beständig sind, die organischen Lösemitteln besser widerstehen als Membranen aus hydrophobem Polymerisat, die eine gute Benetzbarkeit aufweisen und auch gegenüber der Einwirkung von Mikroorganismen unempfindlich sind.

Gelöst wird die Aufgabe durch eine Membran der eingangs genannten Gattung, deren Kennzeichenmerkmale darin zu sehen sind, daß sie ein Copolyamid enthält, das die folgenden wiederkehrenden Struktureinheiten aufweist:

(A) $-OC-Ar^1-CO-$
(B) $-NH-para-Phenylen-NH-$
(C) $-NH-meta-Phenylen-NH-$
(D) $-NH-Ar^2-O-Ar^4-O-Ar^3-NH-$

Die Symbole $Ar^1$, $Ar^2$, $Ar^3$ und $Ar^4$ haben hierbei folgende Bedeutung:

| | |
|---|---|
| $-Ar^1-$ | bedeutet einen 1,4-Phenylen oder einen anderen zweiwertigen $C_6$-$C_{12}$-aromatischen oder heteroaromatischen, gegebenenfalls Sulfonsäuregruppen oder Etherbrücken enthaltenden, Rest, bei dem die Bindungen in para- oder vergleichbarer koaxialer oder antiparalleler Stellung stehen und der gegebenenfalls mit einem oder zwei verzweigten oder unverzweigten $C_1$-$C_4$-Alkyl- oder Alkoxyresten oder mit einem oder mehreren Halogenatomen, beispielsweise Chlor, Fluor oder Brom, substituiert ist; |
| $-Ar^2-$, $-Ar^3-$ und $-Ar^4-$ | stehen für 1,4-Phenylenreste, die gegebenenfalls mit einem oder zwei verzweigten oder unverzweigten $C_1$-$C_4$-Alkyl- oder Alkoxyresten substituiert sind; |

Erfindungsgemäß sind also zur Bildung der in der Membran enthaltenen Copolyamide drei Diaminkomponenten notwendig. Membrane ähnlichen Typs sind bereits in der EP-A-0 325 962 beschrieben worden. Demgegenüber zeichnen sich die erfindungsgemäßen Membranen insbesondere durch eine Erhöhung der Löslichkeit der membranbildenden Polyaramide in polar aprotischen Lösemitteln vom Amidtyp aus. Dies vereinfacht einerseits die Verarbeitung der Polymerlösungen und die Herstellung der erfindungsgemäßen Membrane und gibt andererseits dem Fachmann die Möglichkeit, die Eigenschaften der erfindungsgemäßen Membrane gezielt in einem weiten Bereich zu variieren.

Darüberhinaus sind die zur Herstellung der nachstehend beschriebenen Polyaramide eingesetzten Monomere weniger toxisch als die in der EP-A-0 325 962 aufgeführten. Dies vereinfacht beträchtlich die Präparation der für die Herstellung der Membrane verwendeten Polyaramidlösungen.

Die nachstehend beschriebenen Copolyamide sind als solche nicht Gegenstand der vorliegenden Erfindung, sondern sind im Zusammenhang mit Formkörpern in folgenden Druckschriften bereits beschrieben worden: EP-A-0 322 837, EP-A-0 445 673, und die unter Art. 54(3) fallenden EP-A-0 499 230 und EP-A-0 522 418. Die Mengen der eingesetzten Diamine können jedoch, um optimale Membraneigenschaften zu erreichen, von den dort genannten abweichen.

Um optimale Membraneigenschaften zu erreichen, sollten die Diamine vorzugsweise folgende Konzentrationen aufweisen:

| Diamin (B): | bis 50 mol.-% |
| Diamin (C): | bis 60 mol.-% |
| Diamine (D): | 10 bis 70 mol.-% (pro Diamineinheit (D)) |

bezogen auf 100 mol.-% der eingesetzten Säurekomponente (A), wobei das Verhältnis der Diaminkomponenten zur Säurekomponente 0,90:1,10 bis 1,10:0,90, vorzugsweise 1:1, beträgt.

Zur Herstellung der erfindungsgemäß benötigten Copolyamide sind die folgenden Verbindungen geeignet:
Dicarbonsäurederivate der Formel

$$Cl - CO - Ar^1 - CO - Cl \qquad (A')$$

beispielsweise 4,4'-Diphenylsulfondicarbonsäuredichlorid, 4,4'-Diphenyletherdicarbonsäuredichlorid, 4,4'-Diphenyldicarbonsäuredichlorid, 2,6-Naphthalindicarbonsäuredichlorid, 2,5-Furandicarbonsäuredichlorid, insbesondere Terephthalsäuredichlorid.

Aromatische Diamine der Struktur

$$H_2N - para - Phenylen - NH_2 \qquad (B')$$

Aromatische Diamine der Struktur

$$H_2N - meta - Phenylen - NH_2 \qquad (C')$$

Diaminkomponenten der Struktur

$$H_2N - Ar^2 - O - Ar^4 - O - Ar^3 - NH_2 \qquad (D')$$

beispielsweise 1,4-bis-(4-Aminophenoxy)benzol.

Die Lösungskondensation der aromatischen Dicarbonsäuredichloride mit den Mischungen der aromatischen Diamine erfolgt in aprotischen, polaren Lösungsmitteln vom Amidtyp wie z.B. in N,N-Dimethylacetamid oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegeben werden. Bevorzugte Zusätze sind Calciumchlorid und/oder Lithiumchlorid.

Die Polykondensationstemperaturen liegen üblicherweise zwischen -20°C und + 120°C, bevorzugt zwischen + 10°C und + 100°C. Besonders gute Ergebnisse werden bei Reaktionstemperaturen zwischen + 10°C und + 80°C erzielt. Die Polykondensationsreaktionen werden vorzugsweise so ausgeführt, daß nach Abschluß der Reaktion 1 bis 40, vorzugsweise 3,5 bis 25 Gew.-% an Polykondensat in der Lösung vorliegen.

Die Polykondensation kann in üblicher Weise z.B. durch Zugabe von monofunktionellen Verbindungen wie z.B. Benzoylchlorid gestoppt werden.

Nach Beendigung der Polykondensation, d.h. wenn die Polymerlösung den zur Weiterverarbeitung erforderlichen Staudinger-Index erreicht hat, wird der entstandene und locker an das Amidlösungsmittel gebundene Chlorwasserstoff durch Zugabe basischer Substanzen neutralisiert. Geeignet sind dafür beispielsweise Lithiumhydroxid, Calciumhydroxid, insbesondere Calciumoxid.

Der Staudinger-Index, welcher ein Maß für die mittlere Kettenlänge der entstandenen Polymere ist, liegt bei den membranbildenden Copolyamiden zwischen 50 und 1 000 cm$^3$/g, bevorzugt zwischen 100 und 500 cm$^3$/g, besonders bevorzugt zwischen 150 und 350 cm$^3$/g. Er wurde bestimmt an Lösungen von jeweils 0,5 g Polymer in 100 ml 96 %iger Schwefelsäure bei 25°C.

Unter Staudinger-Index [η] (Grenzviskosität, intrinsic viscosity) wird der Ausdruck

$$\lim_{C_2 \to 0} \frac{\eta_{sp}}{C_2} = [\eta]$$

$$\eta_{sp} = \frac{\eta}{\eta_1} - 1$$

verstanden, wobei

$C_2$ = Konzentration des gelösten Stoffes,
$\eta_{sp}$ = spezifische Viskosität
$\eta$ = Viskosität der Lösung
$\eta_1$ = Viskosität des reinen Lösemittels
ist.

Die im vorstehenden beschriebenen Copolyamide sind als solche nicht Gegenstand der vorliegenden Erfindung, sondern die Erfindung betrifft vielmehr eine semipermeable poröse Membran für die Mikro-, Nano- und Ultrafiltration, die aus den genannten Copolyamiden besteht, die die Aminkomponenten (B), (C) und (D) und die Säurekomponenten der Formel (A) aufweisen.

Zur Herstellung der erfindungsgemäßen Membran aus den Copolyamiden wird die bereits beschriebene Lösung der Copolyamide filtriert, entgast und in bekannter Weise nach dem Phaseninversionsverfahren (Robert E. Kesting, "Synthetic Polymeric Membranes", 2nd Ed., 1985, S. 237 ff.) eine asymmetrische makroporöse Membran hergestellt. Zu diesem Zweck wird die Polymerisatlösung auf eine möglichst plane Unterlage als flüssige Schicht ausgebreitet. Die plane Unterlage kann beispielsweise aus einer Glasplatte oder aus einer Metalitrommel bestehen.

Danach läßt man auf die flüssige Schicht Fällflüssigkeit einwirken, die mit dem Lösungsmittel der Lösung mischbar ist, in der aber die in der Polymerisatlösung gelösten Polymerisate als Membran ausgefällt werden. Die Copolyamid-Lösemittel enthalten hierbei aprotische, polare Lösemittel vom Amidtyp, beispielsweise N,N-Dimethylacetamid oder insbesondere N-Methyl-2-pyrrolidon, als Hauptbestandteil. Als weitere Lösemittelbestandteile kommen leichtflüchtige Substanzen, wie beispielsweise Tetrahydrofuran, Aceton oder Methylenchlorid in Frage.

Als Fällflüssigkeit kommen Wasser, ein- oder mehrwertige Alkohole wie Methanol, Ethanol, Isopropanol, Ethylenglykol oder Glycerin in Frage, darüber hinaus Mischungen dieser Substanzen untereinander oder mit aprotischen, polaren Lösemitteln, wie N,N-Dimethylformamid, N,N-Dimethylacetamid, Dimethylsulfoxid, insbesondere aber mit N-Methyl-2-pyrrolidon.

Durch die Einwirkung der Fällflüssigkeit auf die flüssige Schicht aus Polymerlösung werden die in dieser gelösten Copolyamide unter Ausbildung einer makroporösen Membran mit asymmetrischer Porenstruktur ausgefällt. Das Rückhaltevermögen der erfindungsgemäßen Membranen läßt sich durch eine nachträgliche Behandlung, d.h. nach der Koagulation nachdem praktisch das gesamte Lösungsmittel (>95 %) durch Fällflüssigkeit ersetzt wurde, bei einer Temperatur im Bereich von 60 - 100°C mit einer Flüssigkeit, beispielsweise mit Wasser, ein- oder mehrwertigen Alkoholen oder mit polar, aprotischen Lösungsmitteln vom Amidtyp, wie N-Methylpyrrolidon, N,N-Dimethylformamid, Dimethylsulfoxid oder Mischungen dieser Flüssigkeiten untereinander oder auch durch eine Behandlung mit gegebenenfalls überhitztem Wasserdampf (>100 °C) gezielt variieren.

Bei der Verfahrensdurchführung läßt man die Fällflüssigkeit vorteilhaft so lange auf die durch diese ausgefällte Membran einwirken, bis aus dieser praktisch das gesamte Lösungsmittel durch Fällflüssigkeit ersetzt ist. Danach wird die gebildete Membran von Fällflüssigkeit befreit, beispielsweise dadurch, daß man die Membran direkt in einem Luftstrom mit einer relativen Luftfeuchtigkeit im Bereich von 20 bis 100 % trocknet oder aber zunächst mit einem Weichmacher wie Glycerin behandelt und danach trocknet.

Zur Herstellung von Membranen, die auf einer Trägerschicht angeordnet sind, welche für strömungsfähige Medien durchlässig ist, geht man wie vorstehend angegeben vor, verwendet jedoch als Unterlage zur Ausbildung der Membranschicht als Träger für diese ein Vlies, z.B. aus Kunststoff oder Papier und beläßt nach Ausbildung der Membranschicht diese auf der Unterlage. Die Membran kann aber auch zunächst trägerfrei hergestellt und erst danach auf einen durchlässigen Träger aufgebracht werden. Die so hergestellten Flachmembranen besitzen eine Dicke im Bereich von 10 bis 300 μm, insbesondere im Bereich von 20 bis 150 μm.

In bekannter Weise sind aus der Lösung der Copolyamide auch Hohlfasern bzw.

Kapillaren herstellbar, indem man die Polymerisatlösung nach dem Stande der Technik durch eine entsprechend ausgebildete formgebende Ringspalt- bzw. Hohlnadeldüse in Fällflüssigkeit einspinnt. Die Wandstärke derartiger Kapillaren oder Hohlfasern liegt im Bereich von 20 bis 500 μm, insbesondere aber zwischen 150 und 350 μm.

Wird die Membran nach der Koagulation mit Glycerin getränkt, so kann sie vorzugsweise im Bereich von 5 bis 60 % Glycerin, bezogen auf ihr Gesamtgewicht, enthalten; die derart imprägnierte Membran wird getrocknet, z.B. bei einer Temperatur im Bereich von 30 - 80°C.

Die erfindungsgemäße Membran eignet sich außer für die dem Fachmann bekannten Standardanwendungen poröser Membranen, wie Druckfiltration (Mikro-, Nano- und Ultrafiltration), Diafiltration und Dialyse ebenfalls als Trägermembran für permselektive Schichten, die direkt auf oder in der Membran erzeugt werden. So können beispielsweise "ultradünne" Schichten ($\leq$ 1 μm) aus Polymeren mit funktionellen Gruppen (z.B. Silikone, Celluloseether, Fluorcopolymere) auf Wasser gespreitet werden, von dort auf die Membranoberfläche aufgebracht und z.B. durch Reaktion mit einem Diisocyanat kovalent fixiert werden, um somit höhere Permselektivitäten zu erzielen. Analog eignen sich die erfindungsgemäßen Membranen auch als Träger reaktiver Moleküle, beispielsweise um Enzyme oder Antikoagulantien wie Heparin nach dem Stande der Technik zu fixieren.

Die Dicke der erfindungsgemäßen Membranen ohne Trägerschicht liegt im Bereich von 10 bis 300 μm, insbesondere von 20 bis 120 μm.

Beispiel 1

Für die Herstellung der im Beispiel untersuchten Membran wurde in N-Methylpyrrolidon als Lösungsmittel ein Copolyamid aus

(A') 100 Mol.-% Terephthalsäuredichlorid
(B') 50 Mol.-% Paraphenylendiamin
(C') 37,5 Mol.-% Metaphenylendiamin und
(D') 12,5 Mol.-% 1,4-Bis-(4-aminophenoxy)benzol

in einer Konzentration von 10 % bei einer Temperatur von 70°C hergestellt. Eine Lösung dieses Copolyamids wurde auf einem Polypropylen-Trägervlies aufgebracht und in Wasser bei 20°C koaguliert.

Die hydraulische Permeabilität (Ultrafiltration) und das Rückhaltevermögen gegenüber gelösten Makromolekülen wurden bei Drücken von 3,0 bar bei 20°C in einer gerührten zylindrischen Zelle bestimmt (500 U/min, 250 ml, Membranfläche 38 cm$^2$).

Das Rückhaltevermögen ist definitionsgemäß

$$R = \frac{C_1 - C_2}{C_1} \cdot 100 \ [\%]$$

$C_1$ ist die Konzentration der wäßrigen Testlösung,
$C_2$ ist die Konzentration im Permeat.

Als Testlösung wurde eine 2 %ige wäßrige Polyvinylpyrrolidonlösung (PVP) eingesetzt, erhältlich unter dem Namen "®Kollidon K30" der Firma BASF (PVP K30), die Molmasse des Polyvinylpyrrolidons betrug 49 000 Dalton. Des weiteren wurden 1 %ige wäßrige Lösungen fraktionierter Dextrane mit Molmassen 10 000, 40 000 und 70 000 verwendet, erhältlich unter dem Namen Dextran T10, Dextran T40 bzw. Dextran T70 von der Firma Pharmacia. Die Dichtemessungen erfolgten mit einem Dichtemeßgerät ®DA 210 der Firma Kyoto Electronics.

Eine hydraulische Permeabilität von 140 l/m$^2$h und ein Rückhaltevermögen von R = 92 % für PVP K30, von R = 70 % für ®Dextran T40 und von R = 40% für ®Dextran T10 wurden ermittelt.

Beispiel 2

Eine Probe der in Beispiel 1 hergestellten Copolyamidlösung wurde auf einem Polyphenylensulfid-Trägervlies aufgebracht und in einem Glycerin/Wasser-Gemisch (1:1) bei einer Temperatur von 20°C gefällt. Es ergaben sich unter den Meßbedingungen von Beispiel 1 eine hydraulische Permeabilität von 55 l/m$^2$h sowie ein Rückhaltevermögen für PVP K30 von R = 86 %, für ®Dextran T40 von R = 68 % und für ®Dextran T10 von R = 37 %.

Beispiel 3

Die in Beispiel 1 hergestellte Copolyamidlösung wurde auf einem Polypropylen-Trägervlies aufgebracht und in Isopropanol bei einer Temperatur von 22°C koaguliert. Es wurden eine hydraulische Permeabilität von 10 l/m$^2$h sowie Rückhaltevermögen von R $\geq$ 99 % für ®Dextran T40 und PVP K30, sowie von R = 98 % für ®Dextran T10 unter den Bedingungen des Beispiels 1 gemessen.

Beispiel 4

Die in Beispiel 1 hergestellte Copolyamidlösung wurde durch Zugabe von NMP auf eine Konzentration von 8 % verdünnt, auf ein Polypropylen-Trägervlies aufgebracht und in einem Gemisch von jeweils 50 Massen-Prozent N-Methylpyrrolidon und Wasser bei einer Temperatur von 20°C koaguliert. Nach der in Beispiel 1 geschilderten Methode wurden eine hydraulische Permeabilität von 100 l/m$^2$h und Rückhaltevermögen von R = 43 % für PVP K 30 und R = 8 % für ®Dextran T40 bestimmt.

Beispiel 5

Die in Beispiel 1 hergestellte Copolyamidlösung wurde durch Zugabe von NMP auf eine Konzentration von 6 % verdünnt, auf ein Polyethylenterephthalat-Trägervlies gestrichen und in Wasser bei 21°C gefällt. Die gemäß Beispiel 1 durchgeführten Messungen ergaben eine hydraulische Permeabilität von 800 l/m$^2$h sowie Rückhaltevermögen von R = 60 % für PVP K30 und R < 5 % für ®Dextran T40.

Beispiel 6

Die in Beispiel 1 präparierte Membran wurde 10 Minuten lang in Wasser von 100°C behandelt. Nach Beispiel 1 wurden eine hydraulische Permeabilität von 200 l/m$^2$h sowie Rückhaltevermögen von R = 96 % für PVP K30, von R = 83 % für ®Dextran T40 und von R = 69 % für ®Dextran T10 bestimmt.

Beispiel 7 (Vergleichsbeispiel)

Die in Beispiel 1 hergestellte Copolyamidlösung wurde durch Zugabe einer Lösung von PVP "®Kollidon K30" (BASF) in NMP so verdünnt, daß eine Lösung enthaltend 8 % Copolyamid und 4 % PVP K 30, bezogen auf die Gesamtmasse der Lösung, entstand. Die Lösung wurde auf einem Polyethylenterephthalat-Trägervlies zu einer dünnen Schicht ausgestrichen und in Wasser bei 22 °C auskoaguliert. Es wurden nach der in Beispiel 1 beschriebenen Methode eine hydraulische Permeabilität von 1500 l/m$^2$h sowie Rückhaltevermögen für PVP K30 von R = 72 % und für ®Dextran T40 von R = 6 % ermittelt.

Die Membran wurde 10 Minuten lang in Wasser bei 100°C behandelt. Die hydraulische Permeabilität ergab sich nun zu 600 l/m$^2$h, die Rückhaltewerte zu R = 91 % für PVP K30 und zu R = 30 % für ®Dextran T40.

| Bsp. | Aminzusammensetzung/Zusätze bzw. thermische Behandlung | Konz. [%] | Permeabilität [l/m²h] hydraulisch | Rückhaltevermögen [%] | | |
|---|---|---|---|---|---|---|
| | | | | K30 | T10 | T40 |
| 1* | B'=50 mol.-% C'=37,5 mol.-% D'=12,5 mol.-% | 10 | 140 | 92 | 40 | 70 |
| 2 | wie 1 | 10 | 55 | 86 | 37 | 68 |
| 3* | wie 1 | 10 | 10 | ≧99 | 98 | ≧99 |
| 4* | wie 1 | 8 | 100 | 43 | | 8 |
| 5° | wie 1 | 6 | 800 | 60 | | <5 |
| 6* | wie 1 H₂O (100°C) | 10 | 200 | 96 | 69 | 83 |
| 7° | wie 1 8% Copolyamid/4% K30 H₂O (100°C) | 8 | 1500 600 | 72 91 | | 6 30 |

K30 Polyvinylpyrrolidon ®Kollidon K30
T10,T40 wäßrige Dextranlösungen mit Molmassen 10 000 bzw. 40 000

* PP (Polypropylen)-Trägervlies
o PET (Polyethylenterephthalat)-Trägervlies

## Patentansprüche

1. Poröse, asymmetrische, hydrophile Membran für die Mikro-, Nano- und Ultrafiltration, dadurch gekennzeichnet, daß sie aus einem Copolyamid besteht, das die folgenden wiederkehrenden Struktureinheiten

   (A) -OC-Ar$^1$-CO-
   (B) -NH-para-Phenylen-NH-
   (C) -NH-meta-Phenylen-NH-
   (D) -NH-Ar$^2$-O-Ar$^4$-O-Ar$^3$-NH-

   aufweist, wobei die Symbole Ar$^1$, Ar$^2$, Ar$^3$ und Ar$^4$ die folgende Bedeutung haben:

   -Ar$^1$-     bedeutet einen 1,4-Phenylen oder einen anderen zweiwertigen $C_6$-$C_{12}$-aromatischen oder heteroaromatischen Rest, gegebenenfalls Sulfonsäuregruppen oder Etherbrücken enthaltenden Rest, bei dem die Bindungen in para oder vergleichbarer koaxialer oder antiparalleler Stellung stehen und der gegebenenfalls mit einem oder zwei verzweigten oder unverzweigten $C_1$-$C_4$-Alkyl- oder Alkoxyresten oder mit einem oder mehreren Halogenatomen, beispielsweise Chlor, Fluor oder Brom, substituiert ist,

   -Ar$^2$-, -Ar$^3$- und -Ar$^4$-     stehen für 1,4-Phenylenreste, die gegebenenfalls mit einem oder zwei verzweigten oder unverzweigten $C_1$-$C_4$-Alkyl- oder Alkoxyresten substituiert sind.

2. Membran gemäß Anspruch 1, dadurch gekennzeichnet, daß als Carbonsäurekomponente (A') 4,4'-Diphenylsulfondicarbonsäuredichlorid, 4,4'-Diphenyletherdicarbonsäuredichlorid, 4,4'-Diphenyldicarbonsäuredichlorid, 2,6-Naphthalindicarbonsäuredichlorid, 2,5-Furandicarbonsäuredichlorid, oder Terephthalsäuredichlorid eingesetzt wird.

**3.** Membran gemäß Anspruch 2, dadurch gekennzeichnet, daß als Carbonsäure Komponente (A') Terephthalsäuredichlorid eingesetzt wird.

**4.** Membran gemäß mindestens einem der Ansprüche 1 bis 3, dadurch gekennzeichnet, daß das Copolyamid einen Staudinger-Index (gemessen in 96 %iger Schwefelsäure bei 25°C) im Bereich von 50 bis 1000 cm$^3$/g aufweist.

**5.** Membran gemäß mindestens einem der Ansprüche 1 bis 4, dadurch gekennzeichnet, daß sie eine Flachmembran ist, mit einer Dicke im Bereich von 10 bis 300 µm.

**6.** Membran gemäß Anspruch 5, dadurch gekennzeichnet, daß sie auf einer für strömungsfähige Medien durchlässigen Trägerschicht aus Kunststoffvlies oder aus Papier angeordnet ist.

**7.** Membran gemäß mindestens einem der Ansprüche 1 bis 4, dadurch gekennzeichnet, daß sie eine Hohlfasermembran ist.

**8.** Verfahren zur Herstellung einer Membran gemäß mindestens einem der Ansprüche 1 bis 7, bei dem die Polymerisatlösung auf eine plane Unterlage als flüssige Schicht ausgebreitet und danach auf die flüssige Schicht Fällflüssigkeit aufgebracht wird, die mit dem Lösungsmittel der Lösung mischbar ist, in der aber die in der Polymerisatlösung gelösten Polymerisate als Membran ausgefällt werden, wobei die Lösemittel für die Copolyamide aprotische, polare Lösungsmittel vom Amidtyp als Hauptbestandteil enthalten.

**9.** Verfahren gemäß Anspruch 8, dadurch gekennzeichnet, daß als aprotische, polare Lösungsmittel vom Amidtyp N,N-Dimethylacetamid oder N-Methyl-2-pyrrolidon verwendet werden.

**10.** Verfahren gemäß Anspruch 8 oder 9, dadurch gekennzeichnet, daß als weitere Bestandteile des Lösemittels Tetrahydrofuran, Aceton oder Methylenchlorid verwendet werden.

**11.** Verfahren gemäß mindestens einem der Ansprüche 8 bis 10, dadurch gekennzeichnet, daß als Fällflüssigkeit Wasser verwendet wird.

**12.** Verfahren gemäß mindestens einem der Ansprüche 8 bis 10, dadurch gekennzeichnet, daß als Fällflüssigkeit Alkohole wie Methanol, Ethanol, Isopropanol, Ethylenglykol oder Glycerin verwendet werden.

**13.** Verfahren gemäß mindestens einem der Ansprüche 8 bis 10, dadurch gekennzeichnet, daß als Fällflüssigkeit Mischungen von Wasser mit ein- oder mehrwertigen Alkoholen oder von Wasser beziehungsweise ein- oder mehrwertigen Alkoholen mit aprotischen, polaren Lösemitteln, ausgewählt aus N,N-Dimethylformamid, N,N-Dimethylacetamid, Dimethylsulfoxid und N-Methyl-2-pyrrolidon, verwendet werden.

**14.** Verfahren zur Veränderung des Rückhaltevermögens einer Membran gemäß mindestens einem der Ansprüche 1 bis 7, dadurch gekennzeichnet, daß die Membran, bei der praktisch das gesamte Lösungsmittel durch Fällflüssigkeit ersetzt ist, einer Behandlung bei einer Temperatur im Bereich von 60 bis 100°C unterzogen wird.

**15.** Verfahren zur Veränderung des Rückhaltevermögens einer Membran gemäß Anspruch 14, dadurch gekennzeichnet, daß die Membran mit einer Flüssigkeit oder mit gegebenenfalls überhitztem Wasserdampf behandelt wird.

**16.** Verfahren zur Veränderung des Rückhaltevermögens einer Membran gemäß Anspruch 14, dadurch gekennzeichnet, daß die Membran mit einem Weichmacher behandelt und in einem Luftstrom mit einer relativen Luftfeuchtigkeit im Bereich von 20 bis 100 % behandelt wird.

## Claims

**1.** A porous, asymmetric, hydrophilic membrane for micro-, nano- and ultrafiltration, which consists of a copolyamide which has the following recurring structural units

(A) -OC-Ar$^1$-CO-
(B) -NH-para-phenylene-NH-
(C) -NH-meta-phenylene-NH-
(D) -NH-Ar$^2$-O-Ar$^4$-O-Ar$^3$-NH-

where the symbols $Ar^1$, $Ar^2$, $Ar^3$ and $Ar^4$ have the following meaning:

| | |
|---|---|
| $-Ar^1-$ | is a 1,4-phenylene or another bivalent $C_6$-$C_{12}$-aromatic or heteroaromatic radical, said radical possibly containing sulfonic acid groups or ether bridges, in which radical the bonds are in para or comparable coaxial or antiparallel position and which radical is unsubstituted or substituted by one or two branched or unbranched $C_1$-$C_4$- alkyl or alkoxy radicals or by one or more halogen atoms, for example chlorine, fluorine or bromine, |
| $-Ar^2-$, $-Ar^3-$ and $-Ar^4-$ | are 1,4-phenylene radicals which are unsubstituted or substituted by one or two branched or unbranched $C_1$-$C_4$-alkyl or -alkoxy radicals. |

2. The membrane as claimed in claim 1, wherein as a carboxylic acid component (A') 4,4'-diphenyl sulfone dicarbonyl dichloride, 4,4'-diphenyl ether dicarbonyl dichloride, 4,4'-diphenyldicarbonyl dichloride, 2,6-naphthalenedicarbonyl dichloride, 2,5-furandicarbonyl dichloride, or terephthalyl dichlorid is used.

3. The membrane as claimed in claim 2, wherein the carboxylic acid component (A') used is terephthalyl dichloride.

4. The membrane as claimed in at least one of claims 1 to 3, wherein the copolyamide has a Staudinger index (measured in 96% strength sulfuric acid at 25°C) in the range from 50 to 1000 $cm^3$/g.

5. The membrane as claimed in at least one of claims 1 to 4, which is a flat membrane having a thickness in the range from 10 to 300 $\mu$m.

6. The membrane as claimed in claim 5, which is arranged on a support layer, composed of synthetic web or paper, permeable to flowable media.

7. The membrane as claimed in at least one of claims 1 to 4, which is a hollow fiber membrane.

8. A process for the preparation of a membrane as claimed in at least one of claims 1 to 7, in which the polymer solution is spread as a liquid layer on a planar support and then precipitant liquid is applied to the liquid layer, which precipitant liquid is miscible with the solvent of the solution, but in which the polymers dissolved in the polymer solution are precipitated as a membrane, in which process the solvents for the copolyamides contain aprotic, polar solvents of the amide type as chief constituent.

9. The process as claimed in claim 8, wherein the aprotic, polar solvents of the amide type used are N,N-dimethylacetamide or N-methyl-2-pyrrolidone.

10. The process as claimed in claim 8 or 9, wherein tetrahydrofuran, acetone or methylene chloride are used as further constituents of the solvent.

11. The process as claimed in at least one of claims 8 to 10, wherein the precipitant liquid used is water.

12. The process as claimed in at least one of claims 8 to 10, wherein alcohols such as methanol, ethanol, isopropanol, ethylene glycol or glycerol are used as the precipitant liquid.

13. The process as claimed in at least one of claims 8 to 10, wherein the precipitant liquid used is a mixture of water and mono- or polyhydric alcohols with one other or with aprotic, polar solvents selected from the group consisting of N,N-dimethylformamide, N,N-dimethylacetamide, dimethyl sulfoxide and N-methyl-2-pyrrolidone.

14. A process for changing the rejection efficiency of a membrane as claimed in at least one of claims 1 to 7, which comprises subjecting the membrane, in which virtually all of the solvent has been replaced by precipitant liquid, to a treatment at a temperature in the range from 60 to 100°C.

15. The process for changing the rejection efficiency of a membrane as claimed in claim 14, wherein the membrane is treated with a liquid or with possibly superheated steam.

16. The process for changing the rejection efficiency of a membrane as claimed in claim 14, wherein the membrane is treated with a plasticizer and is treated in an airstream having a relative atmospheric humidity in the range from 20 to 100%.

**Revendications**

1. Membrane hydrophile asymétrique poreuse pour microfiltration, nanofiltration et ultrafiltration, caractérisée en ce qu'elle est constituée d'un copolyamide comportant les motifs structuraux répétitifs suivants :

   (A) -OC-Ar$^1$-CO-
   (B) -NH-para-phénylène-NH-
   (C) -NH-méta-phénylène-NH-
   (D) -NH-Ar$^2$-O-Ar$^4$-O-Ar$^3$-NH-

   où les symboles Ar$^1$, Ar$^2$, Ar$^3$ et Ar$^4$ ont les significations suivantes :
   -Ar$^1$- représente un groupe 1,4-phénylène ou un autre radical divalent, aromatique en C$_6$-C$_{12}$ ou hétéroaromatique, contenant éventuellement des groupes acide sulfonique ou des ponts éther, radical dans lequel les liaisons se trouvent en position para ou dans une position coaxiale ou antiparallèle comparable, et qui est éventuellement substitué par un ou deux radicaux alkyle ou alcoxy en C$_1$-C$_4$ à chaîne droite ou ramifiée, ou par un ou plusieurs atomes d'halogène, par exemple le chlore, le fluor ou le brome ;
   -Ar$^2$-, -Ar$^3$- et -Ar$^4$- représentent des radicaux 1,4-phénylène, qui sont éventuellement substitués par un ou deux radicaux alkyle ou alcoxy en C$_1$-C$_4$ à chaîne droite ou ramifiée.

2. Membrane selon la revendication 1, caractérisée en ce qu'on utilise comme constituant acide carboxylique (A') le dichlorure d'acide 4,4'-diphenylsulfonedicarboxylique, le dichlorure d'acide 4,4'-diphénylétherdicarboxylique, le dichlorure d'acide 4,4'-diphényldicarboxylique, le dichlorure d'acide 2,6-naphtalènedicarboxylique, le dichlorure d'acide 2,5-furannedicarboxylique, ou encore le dichlorure d'acide téréphtalique.

3. Membrane selon la revendication 2, caractérisée en ce qu'on utilise comme constituant acide carboxylique (A') le dichlorure d'acide téréphtalique.

4. Membrane selon au moins l'une des revendications 1 à 3, caractérisée en ce que le copolyamide présente un indice de Staudinger (mesuré dans de l'acide sulfurique à 96 % à 25°C) compris entre 50 et 1000 cm$^3$/g.

5. Membrane selon au moins l'une des revendications 1 à 4, caractérisée en ce qu'il s'agit d'une membrane plate ayant une épaisseur comprise entre 10 et 300 μm.

6. Membrane selon la revendication 5, caractérisée en ce qu'elle est disposée sur une couche support perméable aux fluides en écoulement, constituée d'un voile plastique ou de papier.

7. Membrane selon au moins l'une des revendications 1 à 4, caractérisée en ce qu'il s'agit d'une membrane de fibres creuses.

8. Procédé pour fabriquer une membrane selon une moins l'une des revendications 1 à 7, dans lequel on étale sous forme d'une couche liquide la solution de polymères sur un support plan, puis on applique sur la couche liquide un liquide de précipitation, qui est miscible avec le solvant de la solution, mais dans lequel les polymères dissous dans la solution de polymères précipitent sous forme d'une membrane, les solvants des copolyamides contenant comme constituant principal des solvants aprotiques polaires du type amide.

9. Procédé selon la revendication 8, caractérisé en ce qu'on utilise comme solvant aprotique polaire du type amide le N,N-diméthylacétamide ou la N-méthyl-2-pyrrolidone.

10. Procédé selon la revendication 8 ou 9, caractérisé en ce qu'on utilise comme autres constituants du solvant le tétrahydrofuranne, l'acétone ou le chlorure de méthylène.

11. Procédé selon au moins l'une des revendications 8 à 10, caractérisé en ce qu'on utilise de l'eau comme liquide de précipitation.

12. Procédé selon au moins l'une des revendications 8 à 10, caractérisé en ce qu'on utilise comme liquide de précipitation des alcools tels que le méthanol, l'éthanol, l'isopropanol, l'éthylèneglycol ou le glycérol.

13. Procédé selon au moins l'une des revendications 8 à 10, caractérisé en ce qu'on utilise comme liquide de précipitation des mélanges d'eau et de mono- ou polyalcools, ou d'eau ou de mono- ou polyalcools et de solvants aprotiques polaires, choisis parmi le N,N-diméthylformamide, le N,N-diméthylacétamine, le diméthylsulfoxyde et la N-méthyl-2-pyrrolidone.

14. Procédé pour modifier le pouvoir de rétention d'une membrane selon au moins l'une des revendications 1 à 7, caractérisé en ce que la membrane, dans laquelle la presque totalité du solvant a été remplacée par du liquide de précipitation, est soumise à un traitement à une température comprise entre 60 et 100°C.

15. Procédé pour modifier le pouvoir de rétention d'une membrane selon la revendication 14, caractérisé en ce que la membrane est traitée par un liquide ou par de la vapeur d'eau éventuellement surchauffée.

16. Procédé pour modifier le pouvoir de rétention d'une membrane selon la revendication 14, caractérisé en ce que la membrane est traitée par un plastifiant et est traitée dans un flux d'air présentant une humidité relative de l'air comprise entre 20 et 100 %.